# EUROPEAN PATENT APPLICATION

(11) **EP 4 675 413 A1**
(43) Date of publication of application: **07.01.2026**
(21) Application number: 23925349.5
(22) Date of filing: 31.08.2023
(51) Int. Cl.: G06F 3/0487

(54) **INFORMATION PROCESSING DEVICE, INFORMATION PROCESSING METHOD, AND INFORMATION PROCESSING PROGRAM**

(30) Priority: 27.02.2023 WO PCT/JP2023/007132
(71) Applicant: Otsuka Electronics Co., Ltd., Hirakata-shi, Osaka 573-1132 (JP)
(72) Inventor: SHIMODA, Kensaku, Hirakata-shi, Osaka 573-1132 (JP)
(74) Representative: Hoffmann Eitle
(86) International application number: PCT/JP2023/031812
(87) International publication number: WO 2024/180795

(57) **Abstract**

An information processing device includes: an input unit that receives a user operation; an output unit that causes an image to be displayed on a display; and a processing unit. The processing unit calculates a first movement amount in accordance with a first user operation associated with a guide object having two ends, and updates a subject parameter with a first change amount corresponding to the first movement amount.

## Description

### TECHNICAL FIELD

The present invention relates to an information processing device, an information processing method, and an information processing program.

### BACKGROUND ART

When setting or changing an intended value, a method of operating a slider is common in addition to a method of directly inputting the value. The slider is a user interface component, which may be referred to as a slide bar. By employing the slider, a user can input the value by an intuitive operation. Regarding the slider, the following prior arts have been known, for example.

Japanese Patent Laying-Open No. 2022-150678 (PTL 1) relates to a microscope system and discloses a technique by which focus on a sample surface can be suitably attained. Specifically, a GUI screen including a GUI component such as a slide bar that allows the user to change a focus height is disclosed. In this GUI screen, a focus height value is displayed in the right column of the slide bar. The focus height value is a value in a range from a minimum value of 0 to a maximum value of 65535.

Japanese Patent Laying-Open No. 2011-180538 (PTL 2) discloses a microscope device having a function of reproducing an observation position for a specimen. Specifically, a GUI screen including a Z direction button and a Z direction slide bar each for moving an electrically movable XYZθ stage in a Z direction is disclosed.

Japanese Patent Laying-Open No. 2020-006182 (PTL 3) discloses efficient and accurate interactive control for an imaging device. Specifically, there is disclosed a display screen including a focus icon for moving an ocular fundus focus to a closer or farther point by a left/right arrow.

Japanese Registered Utility Model No. 3021077 (PTL 4) discloses a control device for a wireless communication device so as to attain a feeling very close to a feeling of turning a dial when changing an operation frequency of the wireless communication device using a mouse or the like and so as to readily designate a step of changing the frequency.

Japanese National Patent Publication No. 2012-501496 (PTL 5) discloses a mechanism for allowing a user to scroll a displayed viewer.

Japanese Patent Laying-Open No. 2011-090161 (PTL 6) discloses a user interface that can finely adjust an input amount of an operation member allowing for input of a variable amount corresponding to an operation amount of one operation without adding a dedicated member for finely adjusting the operation input amount.

### CITATION LIST

### PATENT LITERATURE

PTL 1: Japanese Patent Laying-Open No. 2022-150678
PTL 2: Japanese Patent Laying-Open No. 2011-180538
PTL 3: Japanese Patent Laying-Open No. 2020-006182
PTL 4: Japanese Registered Utility Model No. 3021077
PTL 5: Japanese National Patent Publication No. 2012-501496
PTL 6: Japanese Patent Laying-Open No. 2011-090161

### SUMMARY OF INVENTION

### TECHNICAL PROBLEM

For example, in the GUI screen disclosed in PTL 1, the movable range of the slide bar is associated with the range from 0 to 65535. Assuming that this slide bar is used to increase the focus height value by "1", an operation amount on the slide bar has to be very small. Further, depending on a display resolution or the like, the focus height value cannot be increased by "1" even when a minimum operation amount is provided to the slide bar, with the result that a change by a larger value (for example, "100") may be made.

One object of the present invention is to provide a user interface by which an intended value can be intuitively set without depending on the upper and lower limit values of a subject parameter.

### SOLUTION TO PROBLEM

An information processing device according to an embodiment of the present invention includes: an input unit that receives a user operation; an output unit that causes a display to display an image; and a processing unit. The processing unit calculates a first movement amount in response to a first user operation associated with a guide object having two ends, and updates a subject parameter with a first change amount corresponding to the first movement amount.

While the first user operation continues, the processing unit may repeatedly calculate the first movement amount and update the subject parameter.

An indication object may be displayed in association with the first user operation. The processing unit may determine, as the first movement amount, a distance between a position of the indication object at the start of the first user operation and a current position of the indication object.

The processing unit may display an operation-target object that is movable along a path indicated by the guide object.

The processing unit may display the operation-target object at a position corresponding to the indication object in response to a second user operation that moves the indication object into a predetermined region.

While the first user operation continues, the processing unit may cause a manner of displaying the operation-target object to be different from a manner of displaying the operation-target object before the first user operation starts.

The guide object may have a shape elongated in a direction in which the user operation is effectively received.

The processing unit may calculate a second movement amount in accordance with a third user operation associated with a second guide object having two ends, and update the subject parameter with a second change amount corresponding to the second movement amount. When the first movement amount and the second movement amount are the same, the first change amount and the second change amount may be different.

According to another embodiment of the present invention, there is provided an information processing method to be performed by a computer having an input unit that receives a user operation and an output unit that causes a display to display an image. The information processing method includes: calculating a first movement amount in accordance with a first user operation associated with a guide object having two ends; and updating a subject parameter with a first change amount corresponding to the first movement amount.

An information processing program according to still another embodiment of the present invention causes a computer having an input unit that receives a user operation and an output unit that causes a display to display an image to perform: calculating a first movement amount in accordance with a first user operation associated with a guide object having two ends; and updating a subject parameter with a first change amount corresponding to the first movement amount.

### ADVANTAGEOUS EFFECTS OF INVENTION

According to a certain embodiment of the present invention, it is possible to provide a user interface by which an intended value can be intuitively set without depending on the upper and lower limit values of a subject parameter.

### BRIEF DESCRIPTION OF DRAWINGS

[Fig. 1] Each of Figs. 1A to 1C is a schematic diagram showing an exemplary device including a user interface according to the present embodiment.
[Fig. 2] Fig. 2 is a schematic diagram showing an exemplary hardware configuration of an information processing device 100 according to the present embodiment.
[Fig. 3] Each of Figs. 3A to 3E is a schematic diagram showing an exemplary user interface according to the present embodiment.
[Fig. 4] Fig. 4 is a flowchart showing a processing procedure for realizing a user interface according to the present embodiment.
[Fig. 5] Fig. 5 is a flowchart showing another processing procedure for realizing the user interface according to the present embodiment.
[Fig. 6] Fig. 6 is a schematic diagram showing an exemplary dialog for checking update of a subject parameter in the user interface according to the present embodiment.
[Fig. 7] Each of Figs. 7A and 7B is a schematic diagram showing an exemplary user interface according to the present embodiment.
[Fig. 8] Each of Figs. 8A and 8B is a schematic diagram showing another exemplary user interface according to the present embodiment.
[Fig. 9] Each of Figs. 9A and 9B is a schematic diagram showing still another exemplary user interface according to the present embodiment.
[Fig. 10] Each of Figs. 10A and 10B is a schematic diagram showing yet another exemplary user interface according to the present embodiment.
[Fig. 11] Each of Figs. 11A and 11B is a schematic diagram showing still another exemplary user interface according to the present embodiment.
[Fig. 12] Each of Figs. 12A and 12B is a schematic diagram showing yet another exemplary user interface according to the present embodiment.
[Fig. 13] Each of Figs. 13A and 13B is a diagram for illustrating an exemplary method of calculating a movement amount corresponding to a user operation in a guide object 10 shown in each of Figs. 12A and 12B.
[Fig. 14] Each of Figs. 14A and 14B is a diagram for illustrating a scale line in the user interface according to the present embodiment.
[Fig. 15] Fig. 15 is a diagram for illustrating displaying of limit in the user interface according to the present embodiment.
[Fig. 16] Each of Figs. 16A and 16B is a schematic diagram showing an exemplary user interface including a plurality of sliders according to the present embodiment.
[Fig. 17] Each of Figs. 17A to 17C is a diagram for illustrating another exemplary external appearance of the user interface including the plurality of sliders according to the present embodiment.
[Fig. 18] Fig. 18 is a schematic diagram showing an exemplary user interface that can change an adjustment sensitivity according to the present embodiment.

### DESCRIPTION OF EMBODIMENTS

Embodiments of the present invention will be described in detail with reference to figures. It should be noted that the same or corresponding portions in the figures are denoted by the same reference characters and will not be described repeatedly.

### <A. Exemplary Device Including User Interface>

First, an exemplary device including a user interface according to the present embodiment will be described.

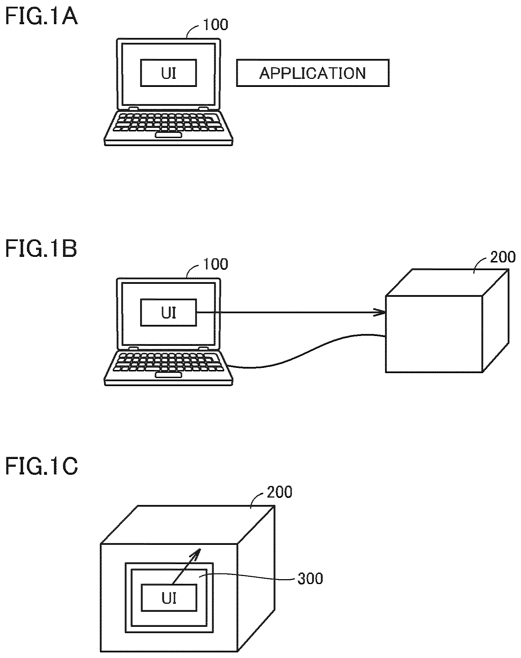

Each of Figs. 1A to 1C is a schematic diagram showing an exemplary device including a user interface according to the present embodiment.

Fig. 1A shows an information processing device 100 that executes an intended application. A user operates a user interface provided in information processing device 100 so as to set an intended value to be referred to by the application executed in information processing device 100. Hereinafter, a subject for which a value is set or changed in accordance with a user operation using the user interface according to the present embodiment is also referred to as a "subject parameter". The subject parameter is configured to hold one or a plurality of values, and may be any variable or may be any structure.

Fig. 1B shows information processing device 100 connected to a subject device 200. Subject device 200 sets or changes the value of the subject parameter in accordance with an instruction from information processing device 100.

Subject device 200 is any device that performs processing or operation depending on the value of the subject parameter. Examples of subject device 200 includes: a manufacturing device that manufactures a product or a semi-finished product; a measurement device that measures an intended sample; an analysis device that analyzes an intended sample; an inspection device that inspects an intended sample; and the like. Subject device 200 may perform processing corresponding to the value of the subject parameter, which is set or changed by the user operating the user interface provided by information processing device 100.

Further, subject device 200 shown in Fig. 1B may be an information processing device that executes an intended application. In this case, information processing device 100 and subject device 200 may be connected via a network such as the Internet. For example, subject device 200 may be cloud computing. Information processing device 100 accesses, via the network, an intended application to be executed in the cloud computing. In this case, when the user operates the user interface provided in information processing device 100, information processing device 100 transmits, to the intended application to be executed in the cloud computing, an instruction indicating a value corresponding to the user operation.

Fig. 1C shows an exemplary operation device 300 attached to subject device 200. The user operates a user interface provided in operation device 300 so as to set or change the value of a subject parameter defining processing or operation of subject device 200.

Operation device 300 has, for example, a touch panel, and receives a touch operation from the user. Operation device 300 may be constructed in one piece with subject device 200.

The implementation of the user interface according to the present embodiment is not limited to the exemplary device shown in each of Figs. 1A to 1C, and the user interface may be implemented in any manner.

### <B. Exemplary Hardware Configuration>

Next, an exemplary hardware configuration of information processing device 100 according to the present embodiment will be described.

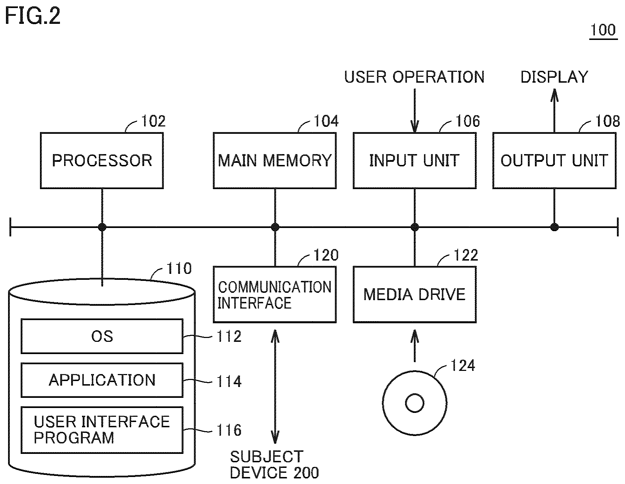

Fig. 2 is a schematic diagram showing the exemplary hardware configuration of information processing device 100 according to the present embodiment. Referring to Fig. 2, information processing device 100 is, for example, a computer, and includes a processor 102, a main memory 104, an input unit 106, an output unit 108, a storage 110, a communication interface 120, and a media drive 122.

Processor 102 corresponds to a processing unit, and is, for example, an arithmetic processing unit such as a CPU (central processing unit) or a GPU (graphics processing unit). Processor 102 reads one or a plurality of programs stored in storage 110 into main memory 104 and executes the program(s). Main memory 104 is a volatile memory such as a DRAM (Dynamic Random Access Memory) or an SRAM (Static Random Access Memory). Main memory 104 functions as a working memory for processor 102 to execute the program(s).

Input unit 106 receives a user operation. Input unit 106 may include an input device such as a keyboard, a mouse, a pen tablet, a trackball, a touch panel, or a touch pad, or may include only an interface (such as a USB (Universal Serial Bus)) for connection with the input device. That is, the input device itself may be included in information processing device 100 or may be present outside information processing device 100.

Output unit 108 causes a display to display an image. For example, output unit 108 outputs a result of execution of a program by processor 102 or the like to the display or the like. Output unit 108 may include the display or may include only an interface (for example, a DVI (Digital Visual Interface), an HDMI (High-Definition Multimedia Interface), an analog RGB terminal, or the like) for outputting a video signal or video data to the display. That is, the display itself may be included in information processing device 100 or may be present outside information processing device 100.

Storage 110 is a nonvolatile memory such as a hard disk or a flash memory, and stores a program, data, and the like. For example, storage 110 stores an operating system (OS) 112, an application 114, and a user interface program 116.

Operating system 112 provides an execution environment for executing application 114 and user interface program 116.

Application 114 includes a computer-readable instruction for performing intended processing.

User interface program 116 corresponds to an information processing program and includes a computer-readable instruction for providing the user interface according to the present embodiment. User interface program 116 may be incorporated into a part of application 114. The user interface according to the present embodiment may be provided by user interface program 116 using a library provided by operating system 112 and/or application 114.

The information processing program may include operating system 112 and/or application 114.

Communication interface 120 exchanges data and/or signal between information processing device 100 and subject device 200.

Media drive 122 reads necessary data from a recording medium 124 (for example, an optical disk or the like) that stores a program, data, and the like, and stores the data into storage 110. Application 114 and/or user interface program 116 may be installed via recording medium 124 or the like, or may be downloaded from a server on the Internet.

At least a part of functions provided by processor 102 of information processing device 100 executing the program may be realized by a hardwired logic circuit (for example, an FPGA (Field-Programmable Gate Array), an ASIC (Application Specific Integrated Circuit), or the like).

The hardware configuration of operation device 300 (Fig. 1C) is the same as that of information processing device 100, and therefore will not be described repeatedly in detail. Moreover, the processing and functions described below can be implemented in operation device 300 in the same manner.

### <C. User Interface>

Next, an exemplary user interface according to the present embodiment will be described. The user interface according to the present embodiment includes a guide object that receives an operation by the user.

In the present specification, the "guide object" means an object (or an image) explicitly or implicitly indicating at least one of a range of receiving a user operation and a direction of receiving the user operation. The "guide object" may explicitly or implicitly indicate the range in which the user operation can be received. The "guide object" may indicate an input region. The "guide object" may be at least a part of a slider.

In the present embodiment, a user interface including a guide object having two ends is mainly used. As an example, the "guide object having two ends" includes a linear shape, an arc shape, a wavy shape, or the like. By using the guide object having the two ends, it is possible to explicitly present, to the user, the range in which the user operation can be received.

In the present specification, the "guide object" includes not only an object that receives a linear user operation but also an object that receives a curvilinear user operation. In the present specification, the "curvilinear user operation" includes any user operation other than the linear user operation.

The user interface according to the present embodiment calculates a change amount in accordance with a movement amount (or an operation amount) by the user. The calculated change amount is a relative value, and a value (update value) after the user operation is performed is determined in accordance with a value (current value) before the user operation is performed and the change amount. Therefore, the slider according to the present embodiment can also be referred to as a "relative value slider".

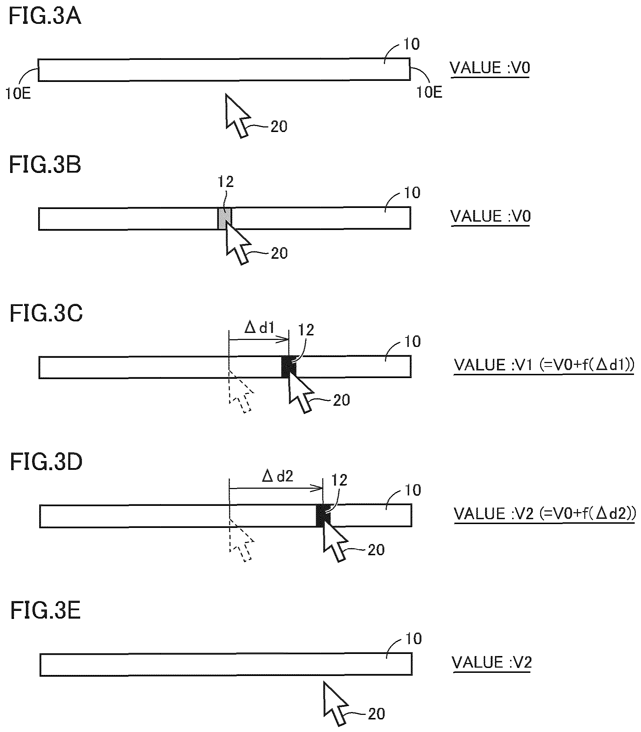

Each of Figs. 3A to 3E is a schematic diagram showing an exemplary user interface according to the present embodiment.

Referring to Fig. 3A, the user interface includes a guide object 10. Guide object 10 receives a user operation. Basically, the value of the subject parameter is updated in accordance with the user operation performed in the region of guide object 10.

Guide object 10 shown in Fig. 3A has a linear shape and has respective ends 10E on the left and right sides.

In the present specification, an "operation-target object" means an object (or an image) whose position and/or form (shape or color) is changed in accordance with the user operation. The "operation-target object" visually expresses the content of the operation by the received user operation.

For the user operation, any input device may be used. For example, a method (hereinafter, also generally referred to as "mouse operation") in which the user operates a mouse, a pen tablet, a trackball, or the like may be employed, or a method (hereinafter, also generally referred to as "touch operation") in which the user touches an intended position of a touch panel or touch pad may be employed.

In the following description, operations such as pressing-down of a button (for example, a left button) of the mouse and touching on the touch panel or touch pad are generally referred to as "pressing-down of a button of an input device". That is, the "pressing-down of the button of the input device" means an operation of generating a certain trigger (or event). Further, a "state in which the button of the input device is pressed down" means a state in which the pressing-down of the button of the mouse continues or the touching on the touch panel or touch pad continues.

In the screen, a cursor 20 serving as an exemplary indication object may be displayed in association with the user operation.

When cursor 20 shown in Fig. 3A is moved into the region of guide object 10 by the user operation, a knob 12 serving as an exemplary operation-target object may be displayed at a position of guide object 10 corresponding to cursor 20 (Fig. 3B). Knob 12 is an object whose position can be changed by the user operation. Knob 12 is movable along guide object 10.

Thus, information processing device 100 displays knob 12 (operation-target object) at a position corresponding to cursor 20 (indication object) in response to the operation that moves cursor 20 into the region of guide object 10. Moreover, the operation for displaying knob 12 may include an operation that moves cursor 20 into a predetermined region. Information processing device 100 may display knob 12 at a position corresponding to cursor 20 in accordance with the user operation. It should be noted that knob 12 may be initially displayed at a predetermined position, rather than the position corresponding to cursor 20.

The length of guide object 10 shown in each of Figs. 3A to 3E may not correspond to the whole of the adjustable range of the subject parameter. That is, the both ends of guide object 10 may not correspond to the upper and lower limit values of the adjustable range of the subject parameter, and the position of knob 12 may not correspond to the current value of the subject parameter. In the user interface according to the present embodiment, the movement amount (change in position), rather than the (absolute) position of knob 12, is handled as information indicating the user operation. Guide object 10 may indicate a path in which knob 12 can be moved.

Guide object 10 may have a shape in which a direction in which knob 12 is moved is made longer so as to allow the user to know, at a glance, the direction in which the user operation using cursor 20 should be provided. Since knob 12 is designed to be moved in the lateral direction in the example shown in each of Figs. 3A to 3E, the long axis of guide object 10 is set to orient in the lateral direction, and the short axis is set to orient in the longitudinal direction.

Thus, guide object 10 has an elongated shape in the direction in which the user operation is effectively received. In the example shown in each of Figs. 3A to 3E, the movement amount is determined by a component, along the long axis of guide object 10, of the operation amount (vector amount) of the user on cursor 20 (knob 12). Here, a component thereof along the short axis of guide object 10 may not be involved in the determination of the movement amount. Moreover, it can also be expressed that the user operation associated with guide object 10 includes the movement operation along the long axis direction of guide object 10 (direction in which knob 12 can be moved).

When the button of the input device is pressed down, an object, such as an arrow, indicating the direction in which knob 12 can be moved may be displayed in the vicinity of knob 12. The displayed arrow object allows the user to known, at a glance, the direction in which knob 12 can be moved.

Moreover, the shape of cursor 20 may be changed to a shape indicating the direction in which knob 12 can be moved. In this case, the change in the shape of cursor 20 may be triggered by pressing down the button of the input device, or the change in the shape of cursor 20 may be triggered by bringing cursor 20 into the region of guide object 10.

As shown in Fig. 3C, when the user moves cursor 20, knob 12 is also moved in conjunction with cursor 20.

Knob 12 may be moved in conjunction with cursor 20 only when cursor 20 is moved in the state in which the button of the input device is pressed down (or the state in which the touching by the user continues). In this case, the operation of moving knob 12 includes an operation of disposing cursor 20 in association with knob 12 and moving cursor 20 in the state in which the button of the input device is pressed down.

Moreover, the operation of moving knob 12 may include a drag operation or an operation of rotating a scroll wheel or a mouse wheel.

When the operation of moving knob 12 is performed, the manner of displaying knob 12 may be caused to be different. Further, when it is brought into the state in which the button of the input device is pressed down (or the state in which the touching by the user continues), the manner of displaying knob 12 may be caused to be different.

For example, in a state shown in Fig. 3B, knob 12 may be displayed in a light color, and in a state shown in each of Figs. 3C and 3D, knob 12 may be displayed in a dark color.

Thus, while the user operation associated with guide object 10 continues, information processing device 100 may cause the manner of displaying knob 12 to be different from the manner of displaying knob 12 before the user operation starts.

By causing the manner of displaying knob 12 to be different and by moving knob 12 in conjunction with cursor 20, a user operation similar to that on a typical slider can be provided. The user can readily recognize that the operation of moving knob 12 is effectively received by changing the manner of displaying knob 12.

The user can start an operation (for example, movement of cursor 20 or knob 12) from any position of guide object 10. The value of the subject parameter is updated based on the movement amount corresponding to the user operation. In this way, information processing device 100 calculates the movement amount in accordance with the user operation associated with guide object 10. Then, information processing device 100 updates the subject parameter with the change amount corresponding to the calculated movement amount.

It should be noted that the user operation associated with guide object 10 includes a series of user operations to be started in the region of the guide object. However, the user operation associated with the guide object may include an operation in which cursor 20 is moved to outside of the region of the guide object until the series of user operations are ended.

The movement amount may depend on a relative distance (movement amount) from the position at which the user operation starts. For example, the movement amount may be calculated as a distance on an imaginary line connecting the position (reference position) when the button of the input device is pressed down and the current position of cursor 20 (or the current position of knob 12). On this occasion, the current position of cursor 20 at the time when the button of the input device is first pressed down may be determined as the reference position. That is, information processing device 100 determines, as the movement amount, the distance between the position of cursor 20 at the start of the user operation associated with guide object 10 and the current position of cursor 20.

Alternatively, the movement amount may be calculated using an imaginary line passing through the center point of knob 12 and extending in a direction (longitudinal direction in the example shown in each of Figs. 3A to 3E) orthogonal to the movement direction (lateral direction in the example shown in each of Figs. 3A to 3E) of knob 12.

The movement amount is a signed value. The sign of the movement amount may be determined in accordance with the movement direction of the user operation. For example, a positive movement amount may represent a case where cursor 20 (or knob 12 in conjunction with cursor 20) is moved to the right side, and a negative movement amount may represent a case where cursor 20 is moved to the left side. Alternatively, the negative movement amount may represent a case where cursor 20 is moved to the right side, and the positive movement amount may represent a case where cursor 20 is moved to the left side.

When a movement amount Δd (signed value) is determined, a change amount (= f(Δd)) depending on movement amount Δd is calculated. As shown in Fig. 3C, when the value (current value) before the operation is performed is V0, an update value V1 corresponding to a movement amount Δd1 is V0+f(Δd1). As shown in Fig. 3D, when the value (current value) before the operation is performed is V0, an update value V2 corresponding to a movement amount Δd2 is V0+f(Δd2).

Function f for calculating the change amount may be a proportional expression (linear expression) or a multi-order expression. For example, when function f is a proportional expression, the change amount = coefficient k × movement amount Δd.

Coefficient k means an adjustment sensitivity, and indicates how much the change amount is calculated with respect to the movement amount. Coefficient k may be designed in accordance with the minimum unit (required minimum resolution) of the subject parameter and the display resolution. For example, it is preferable that the change amount calculated when knob 12 is moved by one pixel (that is, detectable minimum movement amount) does not exceed the minimum unit of the subject parameter.

By appropriately designing coefficient k, it is possible to provide a user interface having the required adjustment accuracy even when the upper and lower limit values of the subject parameter are distant (that is, the adjustable range is wide). Further, even when substantially no upper and/or lower limit values of the subject parameter are present, a user interface with the required adjustment accuracy can be provided.

Function f may be a monotonic function. By employing the monotonic function, it is possible to uniquely determine a correspondence relation between the movement direction of cursor 20 (knob 12) and the increase/decrease of the change amount.

When the pressing-down of the button of the input device is released (or the touching by the user is released), it may be determined that the series of user operations have been ended. Alternatively, when cursor 20 is moved to the outside of the region of guide object 10 (Fig. 3E), it may be determined that the series of user operations have been ended.

Movement amount Δd may be sequentially calculated during the movement of cursor 20, and the value of the subject parameter may be sequentially updated. Information processing device 100 may repeatedly calculate the movement amount and update the subject parameter while the user operation associated with guide object 10 continues.

Alternatively, when it is determined that the series of user operations have been ended (Fig. 3E), the subject parameter may be updated to a value reflecting the change amount.

When the user operation shown in Figs. 3A and 3B is performed again, knob 12 may be displayed again at the position corresponding to cursor 20 without being affected by the position of cursor 20 (Fig. 3D) at the time when the previous series of user operations have been ended.

As described above, in the user interface according to the present embodiment, the change amount is calculated in accordance with the operation amount (movement amount and movement direction) by the user, and the value of the subject parameter is updated by the calculated change amount. Therefore, the whole of the value adjustable range does not need to be associated with the range in which knob 12 can be moved.

### <D. Processing Procedure>

Next, a processing procedure of the user interface according to the present embodiment will be described. Each step of the processing procedure described below may be realized by processor 102 of information processing device 100 executing user interface program 116.

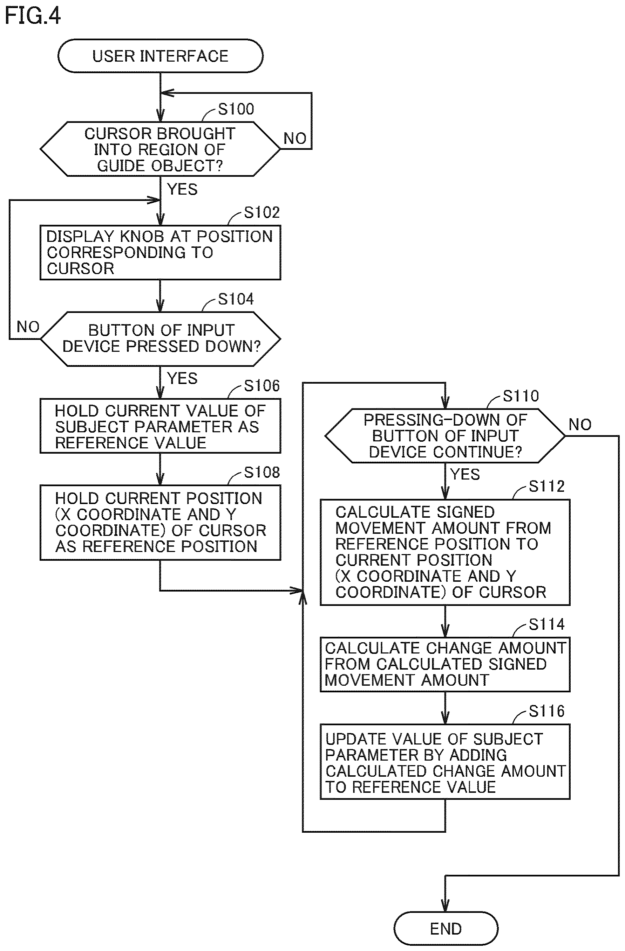

Fig. 4 is a flowchart showing a processing procedure for realizing the user interface according to the present embodiment. Referring to Fig. 4, information processing device 100 determines whether or not cursor 20 has been brought into the region of guide object 10 by a user operation (step S100). When cursor 20 has not been brought into the region of guide object 10 (NO in step S100), the processing of step S100 is repeated.

When cursor 20 has been brought into the region of guide object 10 (YES in step S100), information processing device 100 displays knob 12 at a position corresponding to cursor 20 (step S102). Thus, information processing device 100 displays knob 12 (operation-target object) in response to the operation (second user operation) that moves cursor 20 (indication object) into the region of guide object 10.

Next, information processing device 100 determines whether or not the button of the input device is pressed down (step S104). When the button of the input device is not pressed down (NO in step S104), the processing of step S102 and the subsequent step is repeated.

It should be noted that when cursor 20 is moved to the outside of the region of guide object 10 before the button of the input device is pressed down, the processing may be ended.

When the button of the input device is pressed down (YES in step S104), information processing device 100 holds the current value of the subject parameter as a reference value (step S106) and holds the current position (X coordinate and Y coordinate) of cursor 20 as a reference position (step S108).

Information processing device 100 determines whether or not the pressing-down of the button of the input device continues (step S110). When the pressing-down of the button of the input device is not continued (NO in step S110), the processing is ended.

When the pressing-down of the button of the input device continues (YES in step S110), information processing device 100 calculates a signed movement amount from the reference position to the current position (X coordinate and Y coordinate) of cursor 20 (step S112), and calculates a change amount from the calculated signed movement amount (step S114). In this way, information processing device 100 calculates the movement amount in accordance with the user operation associated with guide object 10.

Information processing device 100 updates the value of the subject parameter by adding the calculated change amount to the reference value (step S116). That is, information processing device 100 updates the subject parameter with the change amount corresponding to the calculated movement amount. Then, the processing of step S110 and the subsequent steps is repeated.

In the processing procedure shown in Fig. 4, the current position of cursor 20 at the time when the button of the input device is first pressed down is determined as the reference position, and the movement amount is calculated. However, in the case where a user interface that receives a curvilinear user operation as described later is employed, the movement amount cannot be linearly calculated, so that the reference position may be sequentially updated as in a processing procedure described below.

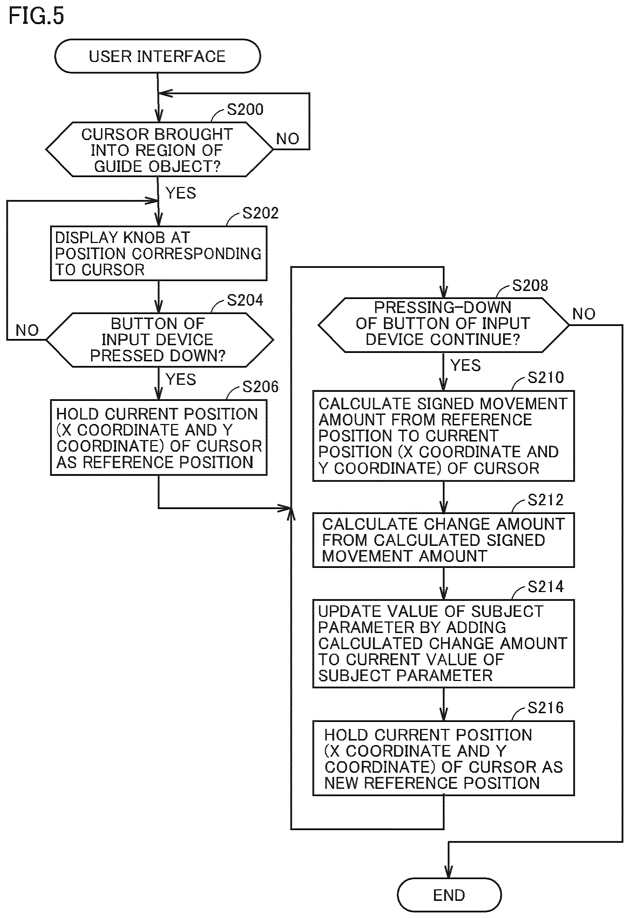

Fig. 5 is a flowchart showing another processing procedure for realizing the user interface according to the present embodiment. Referring to Fig. 5, information processing device 100 determines whether or not cursor 20 has been brought into the region of guide object 10 by a user operation (step S200). When cursor 20 has not been brought into the region of guide object 10 (NO in step S200), the processing of step S200 is repeated.

When cursor 20 is brought into the region of guide object 10 (YES in step S200), information processing device 100 displays knob 12 at a position corresponding to cursor 20 (step S202). Then, information processing device 100 determines whether or not the button of the input device is pressed down (step S204). When the button of the input device is not pressed down (NO in step S204), the processing of step S202 and the subsequent step is repeated.

It should be noted that when cursor 20 is moved to the outside of the region of guide object 10 before the button of the input device is pressed down, the processing may be ended.

When the button of the input device is pressed down (YES in step S204), information processing device 100 holds the current position (X coordinate and Y coordinate) of cursor 20 as the reference position (step S206).

Information processing device 100 determines whether or not the pressing-down of the button of the input device continues (step S208). When the pressing-down of the button of the input device is not continued (NO in step S208), the processing is ended.

When the pressing-down of the button of the input device continues (YES in step S208), information processing device 100 calculates a signed movement amount from the reference position to the current position (X coordinate and Y coordinate) of cursor 20 (step S210), and calculates a change amount from the calculated signed movement amount (step S212). Then, information processing device 100 updates the value of the subject parameter by adding the calculated change amount to the current value of the subject parameter (step S214), and holds the current position (X coordinate and Y coordinate) of cursor 20 as a new reference position (step S216). Then, the processing of step S208 and the subsequent steps is repeated.

In the processing procedure shown in Fig. 5, when the value of the subject parameter is updated, the reference position for calculating the movement amount is also updated. By sequentially updating the reference position, it is possible to appropriately calculate every movement amount even when cursor 20 is moved in a curvilinear manner. That is, in the processing shown in Fig. 5, the movement amount indicates a relative distance from the position of cursor 20 at the time of the previous processing to the position of cursor 20 at the time of the current processing.

### <E. Modifications of User Interface>

The user interface according to the present embodiment may be freely modified as necessary. Hereinafter, some modifications will be described. However, the technical scope of the present invention is not limited to the modifications described below.

### (e1: Displaying of Knob)

As described above, the user interface in which the knob is displayed together with cursor 20 has been exemplified as the object whose position is changed by the user operation, but the knob may not be displayed. Since at least cursor 20 is displayed, the user can know the content of the operation of the user.

### (e2: Timing at which Value of Subject Parameter Is Updated)

As described above, the value of the subject parameter may be sequentially updated in conjunction with the movement of cursor 20 (or knob 12 in conjunction with cursor 20); however, the value of the subject parameter may be updated at a time when it is determined that the series of user operations have been ended. In this case, the processing of step S116 in Fig. 4 is performed in the case of NO in step S110 or in the case of NO in step S118.

Moreover, after it is determined that the series of user operations have been ended, an expected update value for the subject parameter may be presented to the user, and the value of the subject parameter may be updated only when an approval by the user is obtained.

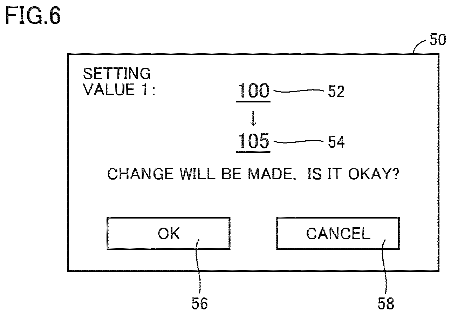

Fig. 6 is a schematic diagram showing an exemplary dialog for checking the update of the subject parameter in the user interface according to the present embodiment. When it is determined that the series of user operations have been ended, a dialog 50 shown in Fig. 6 may be displayed.

Dialog 50 includes a current value 52 of the subject parameter and an expected update value 54 of the subject parameter. After checking current value 52 and expected update value 54, the user presses down an OK button 56 so as to approve the update of the subject parameter, or presses down a cancel button 58 so as not to approve the update of the subject parameter.

When the user presses down OK button 56, the value of the subject parameter is updated to expected update value 54. On the other hand, when cancel button 58 is pressed down, current value 52 of the subject parameter is maintained without change.

Since expected update value 54 of the subject parameter is presented to the user in this way, the user can check in advance whether or not the setting or change as intended has been made.

### (e3: UNDO Processing)

In the user interface according to the present embodiment, the value of the subject parameter is updated in conjunction with the movement of cursor 20 (knob 12) or is updated when it is determined that the series of user operations have been ended. A function (UNDO processing) of bringing the updated value of the subject parameter back to the previous value may be provided.

The UNDO processing may be performed by any user operation, may be performed by a keyboard operation, or may be performed by the user selecting an object for performing the UNDO processing.

By implementing the UNDO processing, the user can bring the value of the subject parameter back to the previous value when, for example, the subject parameter is erroneously updated.

### (e4: Outside of Region of Guide Object)

As long as it is in the state in which the button of the input device is pressed down in the processing procedure shown in each of Figs. 4 and 5, the series of user operations may be regarded as being continued even when cursor 20 is moved to the outside of the region of guide object 10. In this case, for example, even when an operation is performed to move cursor 20 to the outside of the region of guide object 10 and then bring cursor 20 back into the region of guide object 10, the user operation may be regarded as being effective.

It should be noted that when cursor 20 is moved to the outside of the region of guide object 10, only a component in the direction in which cursor 20 (knob 12) is moved may be regarded as an effective input among vectors from the reference position to the current position of current cursor 20.

Assuming that a moving speed of cursor 20 immediately before cursor 20 is moved to the outside of the region of guide object 10 is maintained without change, the calculation (or update) of the change amount may be continued while the button of the input device is being pressed down. An amount of change in the change amount per unit time may be a value corresponding to the movement speed of cursor 20 immediately before cursor 20 is moved to the outside of the region of guide object 10.

Thus, information processing device 100 may display knob 12 when cursor 20 is moved into the region of guide object 10, and may perform the predetermined processing or processing freely selected by the user when cursor 20 is moved to the outside of the region of guide object 10.

### (e5: Variations of User Interface)

The user interface is not limited to the user interface shown in each of Figs. 3A to 3E, and any user interface may be employed. Hereinafter, variations of the user interface will be described.

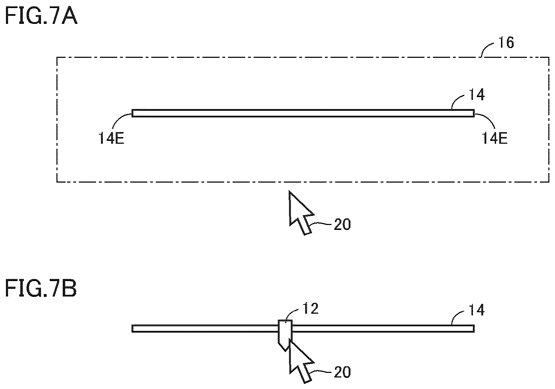

Each of Figs. 7A and 7B is a schematic diagram showing an exemplary user interface according to the present embodiment. Each of Figs. 7A and 7B shows an exemplary user interface that includes a typical slider. Specifically, the user interface shown in each of Figs. 7A and 7B includes a main guide object 14. Main guide object 14 has a linear shape and has respective ends 14E on the left and right sides.

As shown in Fig. 7A, a sub-guide object 16 is set around main guide object 14. Sub-guide object 16 is set in advance as a region for effectively displaying knob 12. Although sub-guide object 16 is illustrated for convenience of description, sub-guide object 16 may not be visually recognizable by the user.

When cursor 20 shown in Fig. 7A is moved into the region of sub-guide object 16, knob 12 is displayed in association with main guide object 14 at a position of sub-guide object 16 corresponding to cursor 20 (Fig. 7B).

Thus, the user interface including the typical slider may be employed.

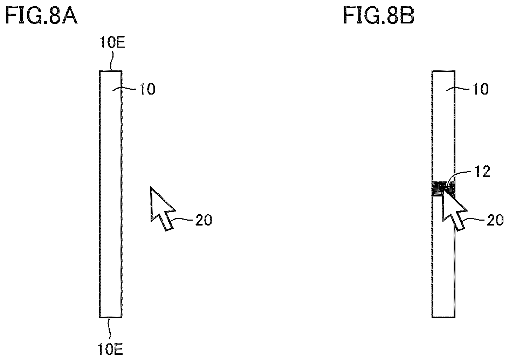

Each of Figs. 8A and 8B is a schematic diagram showing another exemplary user interface according to the present embodiment. Each of Figs. 8A and 8B shows an exemplary slider designed to move knob 12 in the longitudinal direction. Specifically, in the user interface shown in each of Figs. 8A and 8B, the long axis of guide object 10 is set to orient in the longitudinal direction, and the short axis thereof is set to orient in the lateral direction. Guide object 10 has respective ends 10E on the upper and lower sides.

When cursor 20 shown in Fig. 8A is moved into the region of guide object 10, knob 12 is displayed at a position of guide object 10 corresponding to cursor 20 (Fig. 8B).

Thus, the direction in which knob 12 is moved may be the lateral direction or the longitudinal direction. Further, the direction in which knob 12 is moved may be an oblique direction. Guide object 10 having any shape and knob 12 having any movement direction may be employed in accordance with the type of the subject parameter or the like.

In the movement direction of knob 12, a relation between the orientation of the movement and the sign of the change amount can be freely designed. For example, in the slider shown in each of Figs. 8A and 8B, a positive change amount may represent a case where cursor 20 (or knob 12 in conjunction with cursor 20) is moved upward, and a negative change amount may represent a case where cursor 20 is moved downward. Alternatively, the negative change amount may represent a case where cursor 20 is moved upward, and the positive change amount may represent a case where cursor 20 is moved downward.

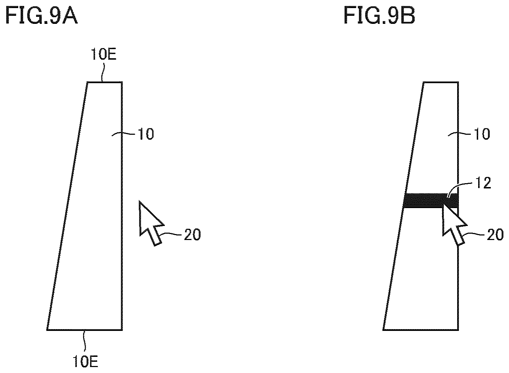

Each of Figs. 9A and 9B is a schematic diagram showing still another exemplary user interface according to the present embodiment. Each of Figs. 9A and 9B shows an exemplary slider designed to linearly move knob 12. Specifically, the user interface shown in each of Figs. 9A and 9B includes guide object 10 having a trapezoidal shape or a diamond shape. Guide object 10 has respective ends 10E on the upper and lower sides.

When cursor 20 shown in Fig. 9A is moved into the region of guide object 10, knob 12 is displayed at a position of guide object 10 corresponding to cursor 20 (Fig. 9B). Knob 12 is movable in the upward/downward direction.

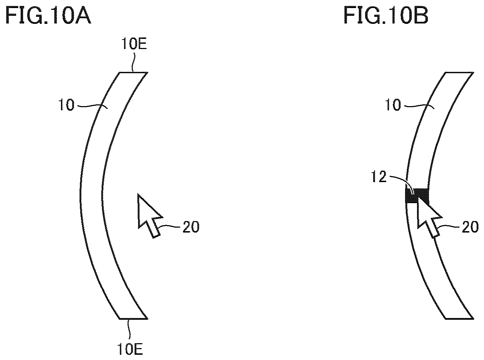

Each of Figs. 10A and 10B is a schematic diagram illustrating yet another exemplary user interface according to the present embodiment. Each of Figs. 10A and 10B shows an exemplary slider designed to move knob 12 in a curvilinear manner. Specifically, the user interface shown in each of Figs. 10A and 10B includes guide object 10 having a curvilinear shape or an arc shape. Guide object 10 has respective ends 10E on the upper and lower sides.

When cursor 20 shown in Fig. 10A is moved into the region of guide object 10, knob 12 is displayed at a position of guide object 10 corresponding to cursor 20 (Fig. 10B). In this way, knob 12 may be moved in a curvilinear manner.

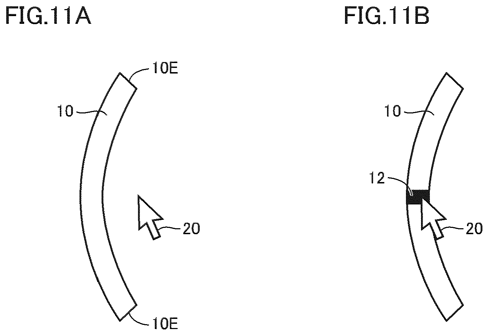

Each of Figs. 11A and 11B is a schematic diagram showing still another exemplary user interface according to the present embodiment. As with Figs. 10A and 10B, each of Figs. 11A and 11B shows an exemplary slider designed to move knob 12 in a curvilinear manner. Specifically, the user interface shown in each of Figs. 11A and 11B includes guide object 10 having a curvilinear shape or an arc shape. Guide object 10 has respective ends 10E on the upper and lower sides.

When cursor 20 shown in Fig. 11A is moved into the region of guide object 10, knob 12 is displayed at a position of guide object 10 corresponding to cursor 20 (Fig. 11B). In this way, knob 12 may be moved in a curvilinear manner.

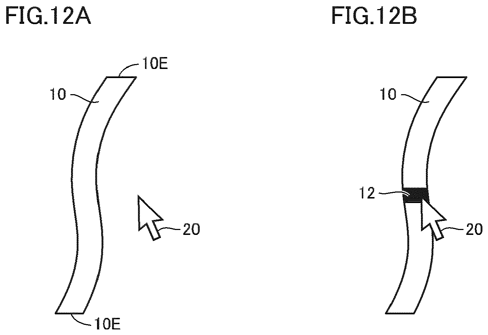

Each of Figs. 12A and 12B is a schematic diagram showing yet another exemplary user interface according to the present embodiment. Each of Figs. 12A and 12B shows an exemplary slider designed to move knob 12 in a curvilinear manner. Specifically, the user interface shown in each of Figs. 12A and 12B includes guide object 10 having a wavy shape or a curved shape. Guide object 10 has respective ends 10E on the upper and lower sides.

When cursor 20 shown in Fig. 12A is moved into the region of guide object 10, knob 12 is displayed at a position of guide object 10 corresponding to cursor 20 (Fig. 12B). In this way, knob 12 may be moved in a curvilinear manner.

### (e6: Calculation of Movement Amount)

For a linear user operation, a movement amount corresponding to the user operation can be relatively readily calculated as shown in Figs. 3A to 3E above. On the other hand, for a curvilinear user operation, any method can be employed to calculate a movement amount corresponding to the user operation.

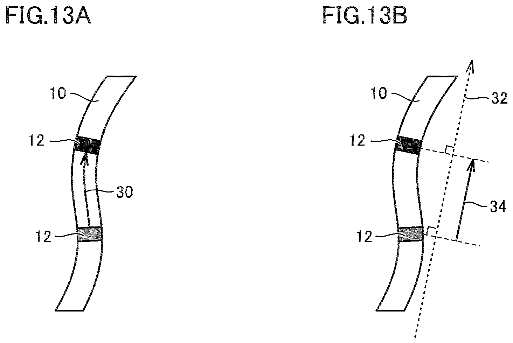

Each of Figs. 13A and 13B is a diagram for illustrating an exemplary method of calculating a movement amount corresponding to a user operation in guide object 10 shown in each of Figs. 12A and 12B.

Referring to Fig. 13A, it is assumed that knob 12 is moved in guide object 10 by a user operation. A total distance 60 in which knob 12 is moved along guide object 10 may be calculated as the movement amount.

Referring to Fig. 13B, an imaginary axis 62 may be set in association with guide object 10. When knob 12 is moved in guide object 10, the positions of knob 12 before and after the movement are projected on an imaginary axis 62. A distance 64 between the projected positions of knob 12 along imaginary axis 62 may be calculated as the movement amount.

The calculation method is not limited to the calculation method shown in each of Figs. 13A and 13B, and any method may be used to calculate the movement amount corresponding to the user operation.

### (e7: Scale Line)

A scale line may be added to guide object 10 so as to visually know a correspondence between the movement amount and the change amount.

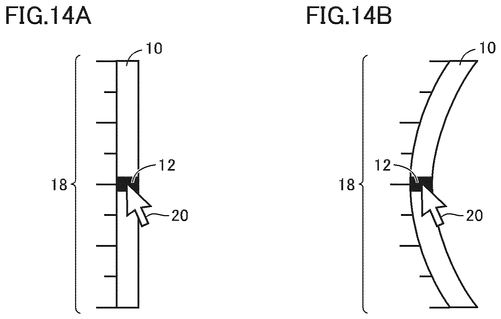

Each of Figs. 14A and 14B is a diagram for illustrating a scale line in the user interface according to the present embodiment. Each of Figs. 14A and 14B shows an exemplary slider in which a scale line 18 is added to guide object 10. Specifically, Fig. 14A shows an example in which scale line 18 is added to the slider shown in each of Figs. 8A and 8B, and Fig. 14B shows an example in which scale line 18 is added to the slider shown in each of Figs. 10A and 10B.

Scale line 18 indicates the magnitude of the change amount calculated in response to the movement of cursor 20 (or knob 12 in conjunction with cursor 20). Intervals in scale line 18 may be dynamically changed in accordance with the coefficient of function f for calculating the change amount.

### (e8: Displaying of Limit)

The slider according to the present embodiment is a relative value slider, and there are no upper and lower limits for the change amount to be input. However, depending on the magnitude of the change amount calculated in response to the movement of cursor 20, the value of the subject parameter may reach the upper limit value or the lower limit value. In such a case, a position at which the value of the subject parameter reaches the upper limit value or the lower limit value may be displayed on guide object 10.

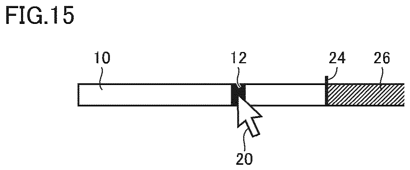

Fig. 15 is a diagram for illustrating the displaying of limit in the user interface according to the present embodiment. Referring to Fig. 15, in guide object 10, a limit object 24 is displayed in addition to knob 12. A region exceeding limit object 24 may be displayed, as a setting-unpermitted region 26, in a manner different from that of guide object 10.

Thus, although there are no such concepts as the upper limit value and the lower limit value in the slider according to the present embodiment, when the value of the subject parameter can be expected to reach the upper limit value or the lower limit value or when the value of the subject parameter reaches the upper limit value or the lower limit value, the user may be notified that the upper limit value or the lower limit value has been reached. As shown in Fig. 15, limit object 24, which is a mark indicating that the upper limit value or the lower limit value has been reached, may be displayed.

By displaying such a limit object 24, occurrence of a discrepancy can be prevented between the operation of the user and the setting value of the subject parameter.

### (e9: Plurality of Sliders)

The user interface according to the present embodiment may include a plurality of sliders.

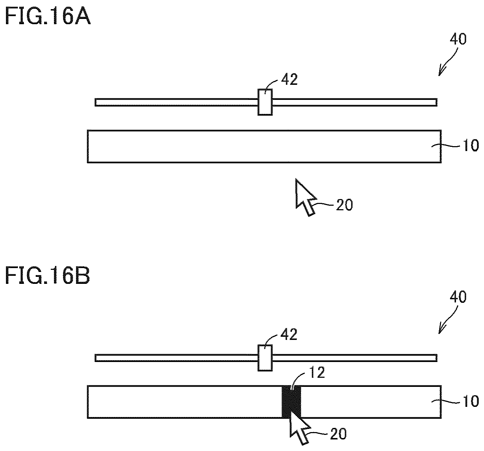

Each of Figs. 16A and 16B is a schematic diagram showing an exemplary user interface including a plurality of sliders according to the present embodiment. Each of Figs. 16A and 16B shows an exemplary user interface including a slider 40 indicating the value of the subject parameter itself and a relative value slider.

The both ends of slider 40 correspond to the upper and lower limit values of the subject parameter. That is, slider 40 is an absolute value slider. The user can operate slider 40 to set or change the value of the subject parameter. However, depending on an adjustable range and a display resolution, even when the knob of slider 40 is moved by one pixel (i.e., detectable minimum movement amount), the value of the subject parameter may be greatly changed.

When cursor 20 shown in Fig. 16A is moved into the region of guide object 10, knob 12 is displayed at a position of guide object 10 corresponding to cursor 20 (Fig. 16B). The change amounts of guide object 10 and knob 12 (relative value slider) can be freely designed. Therefore, by designing the change amount of the relative value slider so as to complement the setting of slider 40, a user interface excellent in usability can be provided for the user.

For example, after the user operates slider 40 to roughly set the value of the subject parameter, the user operates knob 12 to set the value of the subject parameter in detail. In the case where two absolute value sliders having different adjustable ranges are used, when the upper limit value or the lower limit value of the adjustable range is reached, there is a possibility that setting or change cannot be made; however, such a problem does not occur by arranging the absolute value slider and the relative value slider side by side as shown in each of Figs. 16A and 16B. Such a combination of the absolute value slider and the relative value slider is effective when both coarse adjustment and fine adjustment are required as in focus adjustment of a microscope.

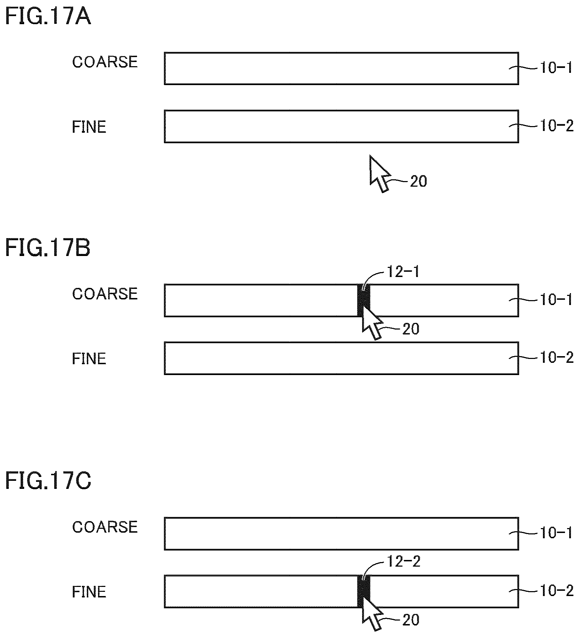

Each of Figs. 17A to 17C is a schematic diagram showing another exemplary user interface including a plurality of sliders according to the present embodiment. Each of Figs. 17A to 17C shows an exemplary user interface including two relative value sliders with different adjustment sensitivities.

As shown in Fig. 17A, two guide objects 10-1, 10-2 are disposed. When cursor 20 is moved into the region of guide object 10-1, a knob 12-1 is displayed at a position of guide object 10-1 corresponding to cursor 20 (Fig. 17B). When cursor 20 is moved into the region of guide object 10-2, a knob 12-2 is displayed at a position of guide object 10-2 corresponding to cursor 20 (Fig. 17C).

Thus, information processing device 100 displays knob 12-1 (first operation-target object) in response to the operation that moves cursor 20 into the region of guide object 10-1. Then, information processing device 100 calculates the movement amount in accordance with the user operation (first user operation) associated with guide object 10-1, and updates the subject parameter with the change amount corresponding to the calculated movement amount.

Moreover, information processing device 100 displays knob 12-2 (second operation-target object) in response to the operation (third user operation) that moves cursor 20 (indication object) into the region of guide object 10-2. Then, information processing device 100 calculates the movement amount in accordance with the user operation (third user operation) associated with guide object 10-2, and updates the subject parameter with the change amount corresponding to the calculated movement amount.

For example, the adjustment sensitivity is set to be large for knob 12-1 that is moved along guide object 10-1, and the adjustment sensitivity is set to be small for knob 12-2 that is moved along guide object 10-2.

The user can change the value of the subject parameter more greatly by using the relative value slider constituted of guide object 10-1 and knob 12-1, and can finely adjust the value of the subject parameter by using the relative value slider constituted of guide object 10-2 and knob 12-2.

When the movement amount of the user operation on knob 12-1 is the same as the movement amount of the user operation on knob 12-2 in this way, the change amount calculated from the movement amount for the user operation on knob 12-1 is different from the change amount calculated from the movement amount of the user operation on knob 12-2. That is, the plurality of relative value sliders for which change amounts to be calculated are different in response to the user operation may be disposed. The user can perform rough adjustment by operating knob 12-1, and then can perform fine adjustment by operating knob 12-2.

For simplicity of description, each of Figs. 17A to 17C illustrates the user interface in which the two relative value sliders are disposed, but a larger number of relative value sliders may be disposed. Moreover, the external appearances of the plurality of relative value sliders associated with the same subject parameter may not be the same.

### (e10: Plurality of Adjustment Sensitivities)

Instead of the configuration in which the plurality of relative value sliders having the different adjustment sensitivities are disposed as shown in Figs. 17A to 17C, a plurality of adjustment sensitivities may be assigned to one relative value slider.

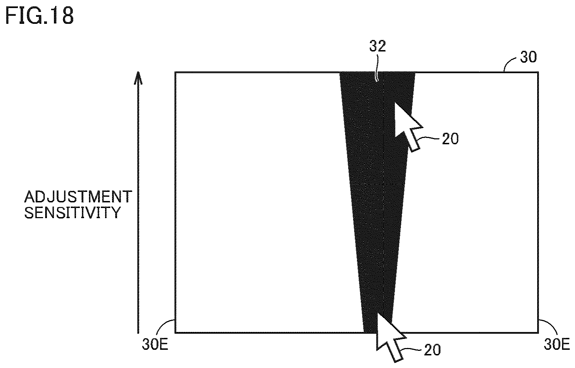

Fig. 18 is a schematic diagram showing an exemplary user interface in which the adjustment sensitivity can be changed according to the present embodiment. Referring to Fig. 18, the user interface includes a guide object 30. Guide object 30 has a linear shape and has respective ends 30E on the left and right sides.

When cursor 20 is moved into the region of guide object 30, a knob 32 is displayed on guide object 30 at a position corresponding to cursor 20. Knob 32 has a trapezoidal shape, and the length (width) thereof in the lateral direction indicates the magnitude of the adjustment sensitivity.

Guide object 30 has a predetermined width in the direction (longitudinal direction in the example shown in Fig. 18) orthogonal to the movement direction (lateral direction in the example shown in Fig. 18) of knob 32. Therefore, the user can freely designate a position at which cursor 20 and knob 32 intersect each other.

Here, different adjustment sensitivities are assigned in the direction orthogonal to the movement direction of knob 32. For example, when cursor 20 is disposed at an upper portion of knob 32 and knob 32 is moved, a larger change amount is calculated. On the other hand, when cursor 20 is disposed at a lower portion of knob 32 and knob 32 is moved, the calculated change amount becomes small.

Since the direction orthogonal to the movement direction of knob 32 is given the meaning of the adjustment sensitivity in this way, rough adjustment and fine adjustment can be performed by one relative value slider.

### (e11: Any Combination)

For convenience of description, each of the characteristic processing and functions has been described, but the processing and functions described above can be combined in any manner into one user interface.

### <F. Advantages>

A slider has been widely used as a user interface for setting or changing an intended value. The minimum value that can be adjusted by the slider depends on the number of pixels assigned to the slider. Therefore, in order to adjust the value of a subject parameter based on the minimum unit when an adjustable range is wide, a larger number of pixels (display region) have to be secured. However, the display region of the slider may be unable to be sufficiently secured due to a restriction such as display resolution.

The relative value slider according to the present embodiment solves the above-described problem. That is, although a general slider reflects the whole of the adjustable range, the slider according to the present embodiment receives a change amount for a subject parameter without consideration of the whole of the adjustable range (i.e., the upper limit value and the lower limit value). Thus, a user interface having a necessary resolution and allowing a value to be intuitively designated can be provided.

It should be noted that also in a rotary encoder that receives a physical user operation, it is possible to set or change a value of a subject parameter having no upper and lower limits. However, when the rotary encoder, which requires a rotation operation, is reproduced in software, compatibility with a mouse operation and a touch operation is low, and it is difficult to intuitively understand an adjustment amount. On the other hand, the user interface according to the present embodiment employs the configuration of the slider, and the user can intuitively operate it.

The user interface according to the present embodiment is also suitable for a measurement device, an analysis device, an inspection device, or the like. For example, in focus adjustment of a microscope, a wide adjustable range has to be secured and fine position designation is required. In such a case, when a slider corresponding to the whole of the adjustable range is employed, it is not possible to finely designate a position. On the other hand, when the slider is designed such that a position can be finely designated, only a part of the whole of the adjustable range can be effectively adjusted. On the other hand, since the change amount for the subject parameter is received in the user interface according to the present embodiment, it is possible to finely designate a position without being affected by the size of the adjustable range.

Moreover, the user interface according to the present embodiment is realized by displaying the user interface on the display. Therefore, it is not necessary to dispose a physical input device (for example, a rotary encoder or the like) in the device, thereby realizing downsizing and cost reduction of the device.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

10, 30 guide object; 10E, 14E end; 12, 32 knob; 14 main guide object; 16 sub-guide object; 18 scale line; 20 cursor; 24 limit object; 26 setting-unpermitted region; 40 slider; 50 dialog; 52 current value; 54 expected update value; 56 OK button; 58 cancel button; 60 total distance; 62 imaginary axis; 64 distance; 100 information processing device; 102 processor; 104 main memory; 106 input unit; 108 output unit; 110 storage; 112 operating system; 114 application; 116 user interface program; 120 communication interface; 122 media drive; 124 recording medium; 200 subject device; 300 operation device.

## Claims

1. An information processing device comprising:
an input unit configured to receive a user operation;
an output unit configured to cause a display to display an image; and
a processing unit configured to:
calculate a first movement amount in accordance with a first user operation associated with a guide object having two ends; and
update a subject parameter with a first change amount corresponding to the first movement amount.

2. The information processing device according to claim 1, wherein while the first user operation continues, the processing unit repeatedly calculates the first movement amount and updates the subject parameter.

3. The information processing device according to claim 1 or 2,
wherein
an indication object is displayed in association with the first user operation, and
the processing unit determines, as the first movement amount, a distance between a position of the indication object at the start of the first user operation and a current position of the indication object.

4. The information processing device according to claim 3, wherein the processing unit is configured to display an operation-target object that is movable along a path indicated by the guide object.

5. The information processing device according to claim 4, wherein the processing unit displays the operation-target object at a position corresponding to the indication object in response to a second user operation that moves the indication object into a predetermined region.

6. The information processing device according to any one of claims 4 or 5, wherein while the first user operation continues, the processing unit causes a manner of displaying the operation-target object to be different from a manner of displaying the operation-target object before the first user operation starts.

7. The information processing device according to any one of claims 1 to 6, wherein the guide object has a shape elongated in a direction in which the user operation is effectively received.

8. The information processing device according to any one of claims 1 to 7, wherein
the processing unit is configured to:
calculate a second movement amount in accordance with a third user operation associated with a second guide object having two ends; and
update the subject parameter with a second change amount corresponding to the second movement amount, and
when the first movement amount and the second movement amount are the same, the first change amount and the second change amount are different.

9. An information processing method to be performed by a computer having an input unit configured to receive a user operation and an output unit configured to cause a display to display an image, the information processing method comprising:
calculating a first movement amount in accordance with a first user operation associated with a guide object having two ends; and
updating a subject parameter with a first change amount corresponding to the first movement amount.

10. An information processing program that causes a computer having an input unit configured to receive a user operation and an output unit configured to cause a display to display an image to perform:
calculating a first movement amount in accordance with a first user operation associated with a guide object having two ends; and
updating a subject parameter with a first change amount corresponding to the first movement amount.
